# EUROPÄISCHE PATENTSCHRIFT

(11) **EP 2 221 222 B1**
(45) Veröffentlichungstag und Bekanntmachung des Hinweises auf die Patenterteilung: **19.02.2014**
(21) Anmeldenummer: 09015226.5
(22) Anmeldetag: 09.12.2009
(51) Int. Cl.: B62D 33/06, B62D 33/063, B60R 19/56

(54) **Fahrerhauslagerung für ein Nutzfahrzeug**
Driver's cabin mount for a commercial vehicle
Agencement de la cabine conducteur pour un véhicule utilitaire

(30) Priorität: 19.02.2009 DE 102009009734
(43) Veröffentlichungstag der Anmeldung: 25.08.2010
(73) Patentinhaber: MAN Truck & Bus AG, 80995 München (DE)
(72) Erfinder: Mangold, Markus, 85221 Dachau (DE); Oerke, Philipp, 81379 München (DE); Kneifel, Eberhard, 89250 München (DE)

(56) Entgegenhaltungen:
- EP-A2- 0 591 726
- DE-A1- 4 103 782
- DE-A1- 19 943 539
- DE-A1- 19 943 540
- FR-A1- 2 904 596

## Beschreibung

Die Erfindung bezieht sich auf ein Nutzfahrzeug mit einem, gegenüber dem Fahrgestellrahmen federnd abgestützten Fahrerhaus, dessen räumliche Lage gegenüber dem Fahrgestellrahmen aus einer, das Antriebsaggregat abdeckenden Fahrbetriebsstellung in eine, das Antriebsaggregat freigebende Offenstellung veränderbar ist und das im Bereich einer frontseitigen Schürze einen Unterfahrschutz aufweist.

Aus der DE 101 30 637 ist ein Unterfahrschutz für Lastkraftwagen und Omnibusse bekannt, der der Vermeidung des Unterfahrens von Personenkraftwagen unter die genannten Nutzfahrzeuge dient. Je Fahrzeugseite ist ein energieverzehrender Unterfahrschutz aus den Elementen Faltenbeuler, Kragträger und einem querversteiften Fahrzeugrahmen gebildet. Die genannten Elemente sind dabei je nach Höhe der kinetischen Energie des Personenkraftwagens im Crashfall mit einem der genannten Nutzfahrzeuge nacheinander plastisch verformbar.

Aus der DE 199 43 540 A1 ist ein Lastkraftwagen mit einer auf einem Fahrwerksrahmen angeordneten Fahrerkabine bekannt, die in ihrer Betriebsstellung ein Antriebsaggregat überdeckt. Dabei ist der überdeckende Kabinenbereich der Fahrerkabine in eine Wartungsstellung bewegbar, in der das Antriebsaggregat zumindest teilweise zugänglich ist. Zur Verlagerung des Kabinenbereichs sind zwischen den beiden Stellungen am Fahrwerksrahmen und an der Fahrerkabine angeordnete Führungsmittel vorgesehen. Die zusammenwirkenden Führungsmittel sind gerade Schiebeführungen, entlang denen der das Antriebsaggregat überdeckende Kabinenbereich in die Wartungsstellung verschiebbar ist.

Im modernen Nutzfahrzeugbau sind die Fahrerhäuser überwiegend als Frontlenker-Fahrerhäuser ausgebildet. Die Fahrerhäuser weisen einen zweiteiligen Aufbau auf mit einer Fahrerkabine, die oberhalb des Fahrgestellrahmens angeordnet ist und gegenüber den Rahmenlängsträgern federnd gelagert ist. Vor der Vorderachse und unterhalb der Fahrerkabine ragt etwa ab der Höhe des Fahrgestellrahmens eine Fahrerhaus-Schürze in etwa senkrecht nach unten in Richtung zur Fahrbahn hin herab. Die Schürze ist zumindest mittelbar mit dem Fahrgestellrahmen verbunden. An der Frontseite der Schürze sind im Regelfall die die Fahrbahn ausleuchtenden Scheinwerfer angebracht. An der Seite des Fahrerhauses weist die Schürze Trittstufen auf, die dem Fahrer den Einstieg in die Fahrerhauskabine erleichtem. Nachteilig ist jedoch, dass herkömmlich bekannte Fahrerhäuser aufgrund ihrer federnden Lagerung gegenüber dem Fahrgestellrahmen und wegen des hohen Schwerpunktes des Fahrerhauses beim Befahren von Kurven deutlich wahrnehmbare Wankbewegungen aufzeigen. Ein zusätzlicher Nachteil besteht darin, dass das vorgenannte Fahrerhaus bei starkem Bremsen eine Nickbewegung in Fahrtrichtung und beim Beschleunigen eine gegen die Fahrtrichtung gerichtete Nickbewegung zeigt. Besonders bei Fahrten in der Dunkelheit hat es sich für Fahrer von Nutzfahrzeugen als nachteilig herausgestellt, dass die Schwingungen und Vibrationen des Fahrgestellrahmens auf die in der Schürze des Fahrerhauses angeordneten Scheinwerfer übertragen werden. Für den Fahrer zeigen sich die Vibrationen in einer zittrigen und unsteten Ausleuchtung des vor ihm befindlichen Straßenabschnittes und tragen besonders bei langen Nachtfahrten zur schnellen Ermüdung des Fahrers bei.

Es ist daher die Aufgabe der Erfindung, ein Fahrerhaus zu schaffen, das die vorgenannten Nachteile ausräumt und den Fahrkomfort des Nutzfahrzeuglenkers erhöht.

Diese Aufgabe wird erfindungsgemäß durch die Merkmale des Anspruchs 1 gelöst.

Erfindungsgemäß kommt ein Fahrerhaus zum Einsatz, das entgegen dem Fahrerhaus eines herkömmlichen Nutzfahrzeugs einteilig gefertigt ist und dabei sowohl die Fahrerhauskabine als auch die Schürze umfasst. Die Schürze trägt dabei die die Fahrbahn ausleuchtenden Scheinwerfer. Da die Schürze und das Fahrerhaus nicht wie in bekannter Weise am Fahrgestellrahmen befestigt sind, wird die Übertragung der Vibrationen des Fahrgestellrahmens auf die Scheinwerfer verhindert. Zudem wird der Zugang zum Motor sowie zum Antriebsstrang des Fahrzeugs für Reparatur- und Wartungszwecke in der Werkstatt sowie an einem im Einsatz befindlichen Fahrzeug wesentlich erleichtert, da das Fahrerhaus auf wenigstens zwei Längsschienen aufruht, die in einer Schlittenführung des Fahrgestellrahmens in bzw. entgegen der Fahrtrichtung geführt werden können. Die Horizontalbewegung des Fahrerhauses gegenüber dem Fahrgestellrahmen kann dabei hydraulisch oder auch auf jede ande re technische Weise durchgeführt werden. Daneben sind zur horizontalen Verschiebung des Fahrerhauses Längsschienen vorgesehen, die auf der jeweiligen Schulter oder am Steg eines Längsträgers des Fahrgestellrahmens angebracht sind. Außer der erfindungsgemäßen Verbindung von Führungsschlitten und Längsschienen sind auch andere im Sinn der Erfindung zielführende technische Maßnahmen vorstellbar. Ein horizontal gegenüber dem Fahrgestellrahmen verschiebbares Fahrerhaus erübrigt somit eine relativ aufwendige Kippmechanik des Fahrerhauses gegenüber dem Fahrgestellrahmen. Das Fahrerhaus ist dabei horizontal stufenweise derart verschiebbar, dass je nach Bedarf nur ein Teil des Motors bzw. des Antriebsstranges oder aber der gesamte Motor und Antriebsstrang freigegeben sind. Ein Austausch des Motors oder wesentlicher Organe des Antriebsstrangs ist dadurch leichter möglich. Je nach Verschiebungsweg des Fahrerhauses gegenüber dem Fahrgestellrahmen wird das Fahrerhaus an dafür vorgesehenen Rastpunkten verliersicher gehalten.

Die Erfindung sieht weiterhin vor, dass im vorderen Bereich des Fahrgestellrahmens an der von der Vorderseite des Nutzfahrzeugs abgewandten Rückseite der Schürze ein Unterfahrschutz angebracht ist, der sich zumindest mittelbar am Fahrgestellrahmen abstützt. Der Unterfahrschutz kann sich dabei entweder an den Längsträgern des Fahrgestellrahmens oder einem vorderen Querträger abstützen. Wird das Nutzfahrzeug nun abgebremst oder beschleunigt, so wird die Nickbewegung in bzw. entgegen der Fahrtrichtung dadurch verhindert, dass sich der an der Schürze des Fahrerhauses angebrachte Unterfahrschutz gegen den Fahrgestellrahmen abstützt und somit eine unerwünschte Nickbewegung unterdrückt.

Die Erfindung sieht weiterhin vor, dass der Unterfahrschutz in an sich bekannter Weise am Fahrgestellrahmen abgestützt ist. Hierdurch wird erreicht, dass je nach Stärke des Bremsvorgangs bzw. Stärke der Beschleunigung oder in Abhängigkeit des Kurvenradius der durchfahrenen Kurve die mögliche Nick- bzw. Wankbewegung möglichst sanft abdämpfbar ist.

Nach einer anderen Ausführungsform der Erfindung ist das Fahrerhaus über Dämpferelemente mit den Längsschienen verbunden. Durch Einsatz von an sich bekannten Stoßdämpfern oder Federungen kann somit das Fahrerhaus auch für einen längeren Fahrbetrieb optimal gegen Fahrbahnunebenheiten abgedämpft werden.

Eine weitere Ausführungsform der Erfindung sieht vor, dass das Fahrerhaus in der Oflenstellung durch Stützeinrichtungen vor dem Herabfallen vom Fahrgestellrahmen geschützt wird. In Abhängigkeit von dem Gewicht des jeweiligen Fahrerhauses und vom Verschiebeweg des Fahrerhauses gegenüber dem Fahrgestellrahmen können am Fahrerhaus vertikal ausfahrbare, hydraulische Stützfüße ausgefahren werden. Denkbar ist auch am Fahrerhaus Abstützeinrichtungen vorzusehen, die in einer Ruheposition horizontal zum Fahrgestellrahmen verlaufen und bei Bedarf in eine vertikale Position verschwenkbar sind. Die Stützeinrichtungen können dabei in ihrer Länge veränderbar sein.

Eine weitere Ausführungsform der Erfindung sieht vor, dass der Unterfahrschutz in an sich bekannter Weise am Fahrgestellrahmen abgestützt ist. Hierdurch wird erreicht, dass je nach Stärke des Bremsvorgangs bzw. Stärke der Beschleunigung oder in Abhängigkeit des Kurvenradius der durchfahrenen Kurve die mögliche Nick- bzw. Wankbewegung möglichst sanft abdämpfbar ist.

Weitere vorteilhafte Ausgestaltungen und zweckmäßige Fortbildungen des erfindungsgemäßen Nutzfahrzeugs sind aus den nachstehenden Beispielsbeschreibungen anhand der Zeichnung näher entnehmbar. Hierbei zeigen:
- Fig. 1: das erfindungsgemäße Fahrerhaus in Fahrbetriebsstellung,
- Fig. 2: das erfindungsgemäße Fahrerhaus in Offenstellung halb ausgefahren,
- Fig. 3: das erfindungsgemäße Fahrerhaus in Offenstellung ganz ausgefahren mit einer frontseitigen Abstützung,
- Fig. 4: einen Ausschnitt A-A entsprechend Fig. 1,
- Fig. 5: einen Ausschnitt A-A vergleichbar mit Fig. 4 nach einem Frontalcrash und
- Fig. 6: in Draufsicht den Unterfahrschutz des erfindungsgemäßen Nutzfahrzeugs mit geschnittenem Fahrgestellrahmen.

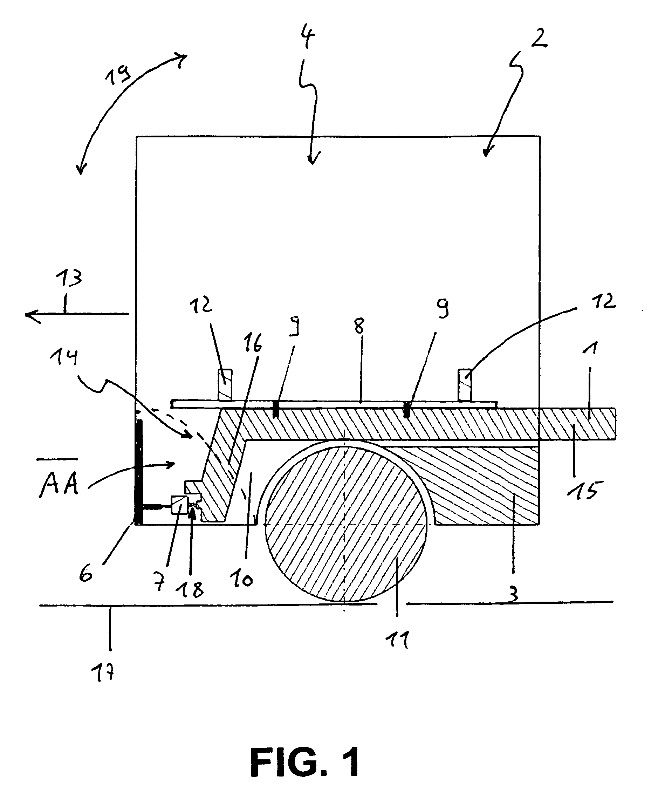

Fig. 1 zeigt in schematisierter Darstellung in Seitenansicht ein erfindungsgemäßes Nutzfahrzeug mit einem Fahrerhaus 2, das in Fahrbetriebsstellung 4 auf dem Fahrgestellrahmen 1 aufliegt. Im unteren Bereich des Fahrerhauses 2 ist die Schürze 6 dargestellt, an der der Unterfahrschutz 7 befestigt ist. In etwa mittig zwischen dem Kotflügel 10 und dem Antriebs aggregat 3 ist das Rad 11 der Vorderachse (nicht gezeigt) dargestellt. Das Fahrerhaus 2 ist in Fahrbetriebsstellung 4 über Feder-Dämpfer-Beine 12 gegenüber den Längsschienen 8 abgestützt. Die Längsschienen 8 sind gegenüber dem Fahrgestellrahmen 1 in einer Schlittenführung 9 in Fahrtrichtung 13 verschiebbar. Am vorderen Ende 14 des Fahrgestellrahmens 1 ist an jedem Rahmenlängsträger 15 in etwa rechtwinklig zum Fahrgestellrahmen 1 und nach vorne unten in Richtung der Fahrbahn 17 weisend eine Stütze 16 angeordnet. In der Fig. 1 ist zwischen der Stütze 16 und dem Unterfahrschutz 7 ein Dämpferelement 18 vorgesehen. Das Dämpferelement 18 stützt sich in Fahrtrichtung 13 gesehen, an seinem hinteren Ende an der Stütze 16 ab. An seinem vorderen Ende ist das Dämpferelement 18 am Unterfahrschutz 7 der Schürze 6 befestigt. Kommt es beim Bremsen oder beim Beschleunigen des Nutzfahrzeugs zu einer Nickbewegung 19 in oder entgegen der Fahrtrichtung 13, so wird die Nickbewegung 19 durch das Dämpferelement 18 abgedämpft bzw. vollständig unterdrückt.

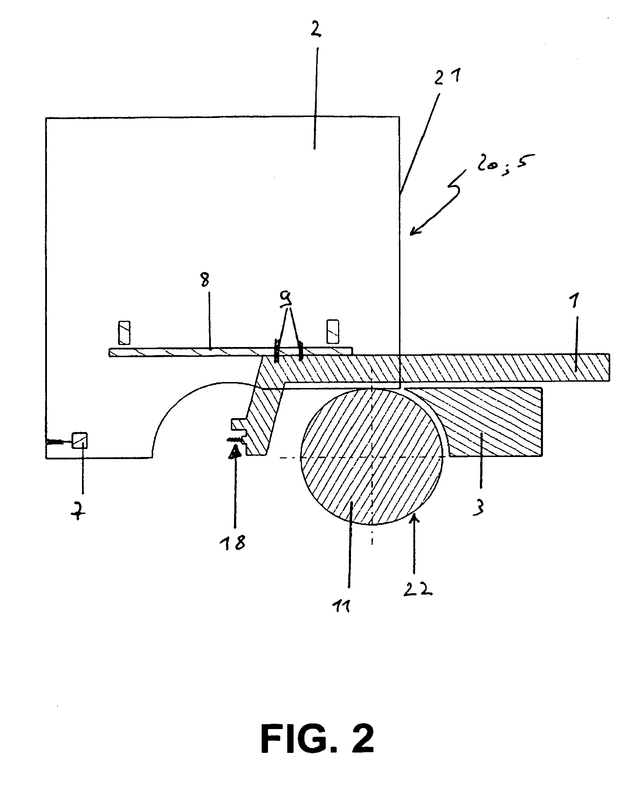

Fig. 2 zeigt ein erfindungsgemäßes Fahrerhaus 2 entsprechend der Fig. 1 in teilweiser Offenstellung 20. Hierbei ist das Antriebsaggregat 3 seitlich und von oben zugänglich. Die Rückwand 21 des Fahrerhauses 2 verläuft in der in Fig. 2 gezeigten Offenstellung 20 in etwa senkrecht zur Lauffläche 22 des Rades 11. Das Dämpferelement 18 ist aus seiner Verankerung am Unterfahrschutz 7 gelöst. Das Fahrerhaus 2 wird in der teilweisen Offenstellung 20 vor dem Überkippen nach vorne unten durch die über die Schlittenführung 9 mit dem Fahrgestellrahmen 1 verbundenen Längsschienen 8 bewahrt.

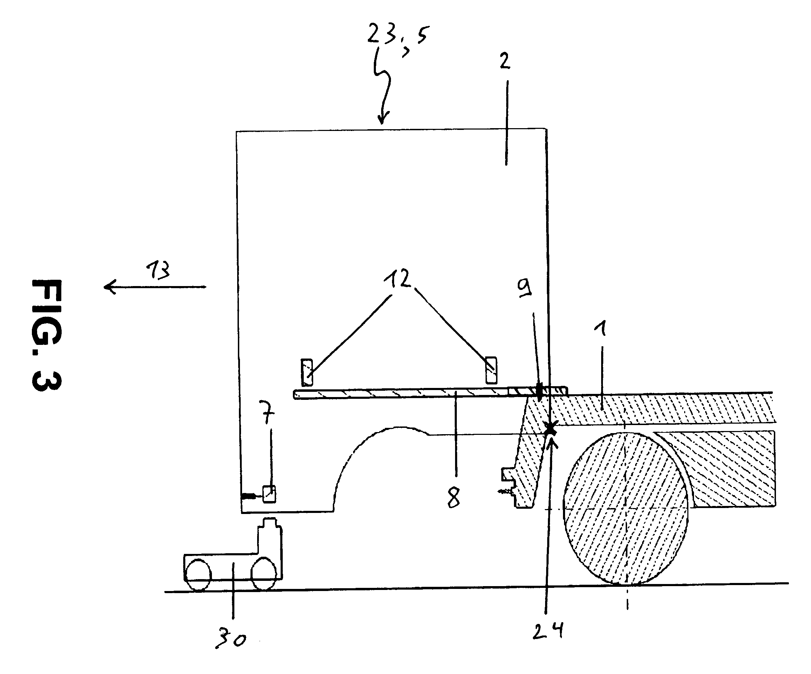

Fig. 3 zeigt das erfindungsgemäße Fahrerhaus 2 entsprechend Fig. 2 in einer maximalen Offenstellung 23. In dieser maximalen Offenstellung 23 steht das Fahrerhaus 2 über die Feder-Dämpfer-Beine 12 und die Längsschienen 8 mit dem Fahrgestellrahmen 1 in Verbindung. Zur verliersicheren Abstützung des Fahrerhauses 2 ist aber in Fig. 3 eine Stützeinrichtung 30 vorgesehen, die fahrbahnseitig am Unterfahrschutz 7 angreift und das Fahrerhaus 2 abstützt. Die Stützeinrichtung 30 kann mobil sein und auf dem Nutzfahrzeug mitgeführt werden oder aber stationär und ortsfest z. B. in einer Werkstatt vorgesehen sein. Das Fahrerhaus 2 ist über die Stützeinrichtung 30 in etwa rechtwinklig zum Fahrgestellrahmen 1 anhebbar, oder aber um den Anlenkpunkt 24 des Fahrerhauses 2 am Fahrgestellrahmen 1 entgegen der Fahrtrichtung 13 verkippbar.

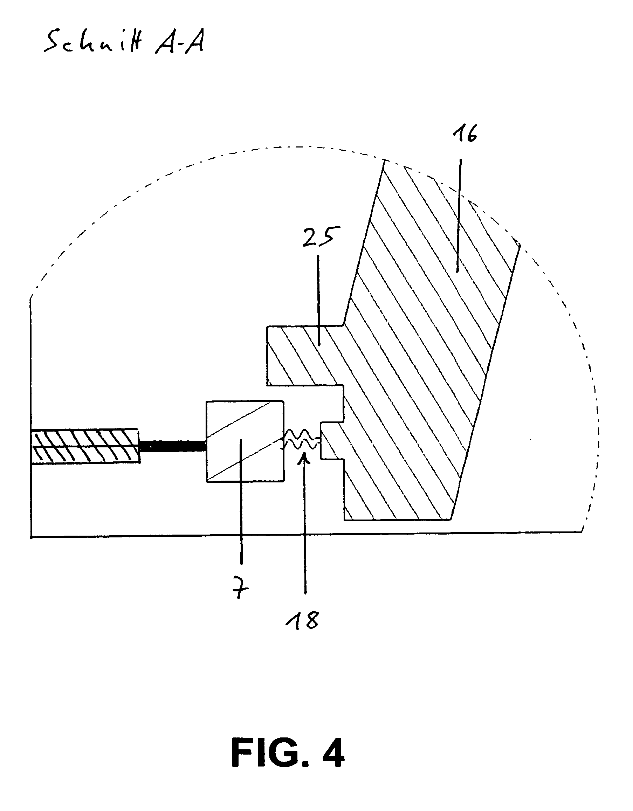

Fig. 4 zeigt einen Ausschnitt A-A aus der Fig. 1. Im Ausschnitt A-A ist das fahrbahnseitige Ende der Stütze 16 zu erkennen, an der das Dämpferelement 18 einen Endes an der Stütze 16 und anderen Endes am Unterfahrschutz 7 befestigt ist. Etwa rechtwinklig zur Stütze 16 ist im Schnitt A-A ein Stopper 25 an der Stütze 16 vorgesehen, der in etwa achsparallel zu den Rahmenlängsträgern 15 des Fahrgestellrahmens 1 verläuft (vgl. dazu Fig. 1-3). Der Stopper 25 agiert beim Bremsen des Nutzfahrzeugs und gleichzeitigem Einfedern des Fahrerhauses 2 gegenüber dem Fahrgestellrahmen 1 als Bewegungsbegrenzer der Stütze 16 in vertikaler Richtung.

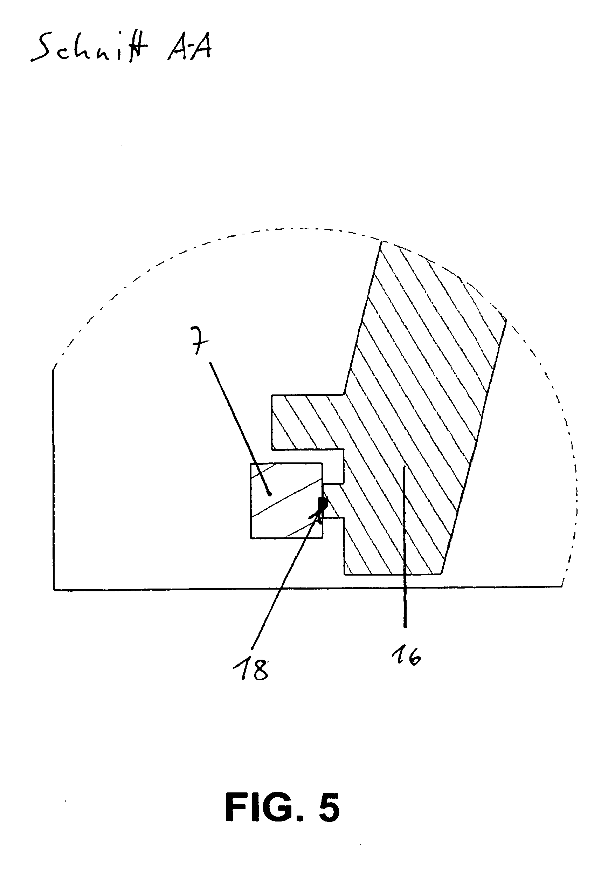

Fig. 5 zeigt den Ausschnitt A-A entsprechend Fig. 4. Das Dämpferelement 18 ist maximal eingefedert, so dass der Unterfahrschutz 7 mit der Stütze 16 in Berührung kommt.

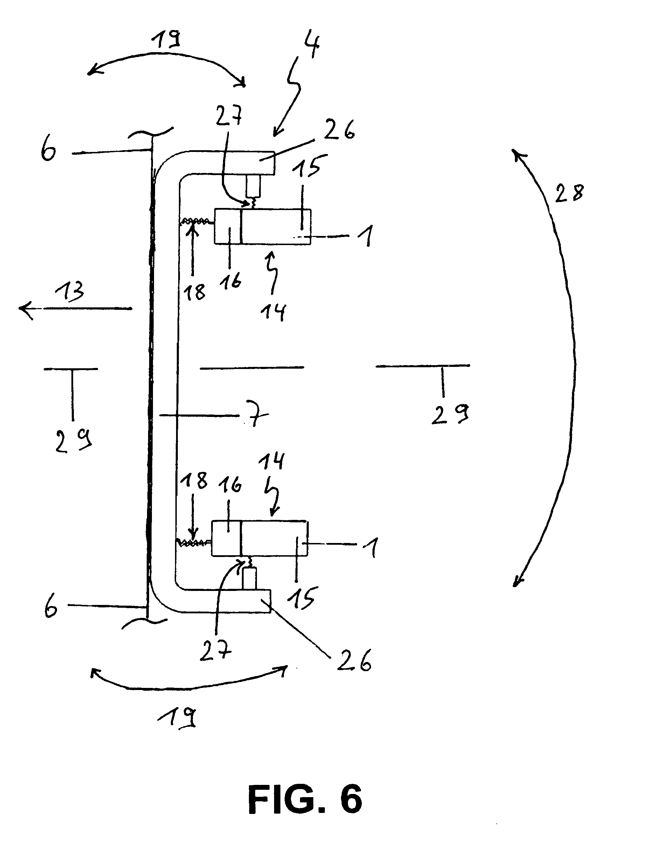

Fig. 6 zeigt in Draufsicht den Unterfahrschutz 7, der über Dämpferelemente 18 von den vorderen Enden 14 der Rahmenlängsträger 15 des Fahrgestellrahmens 1 beabstandet ist. Eine solche Beabstandung ist beispielsweise in Fahrbetriebsstellung 4 des Fahrerhauses 2 (nicht gezeigt) möglich. Denkbar ist auch, dass die Fig. 6 die Position des Unterfahrschutzes 7 beim Beschleunigen des Nutzfahrzeugs zeigt, wobei die Dämpferelemente 18 den an der Schürze 6 des Fahrerhauses 2 befestigten Unterfahrschutz 7 bei einer Nickbewegung 19 entgegen der Fahrtrichtung 13 gegenüber den Stützen 16 der Rahmenlängsträger 15 positionsstabil halten. In der Fig. 6 sind seitliche Flanken 26 des Unterfahrschutzes 7 gezeigt, die über Dämpferelemente 27 mit den Rahmenlängsträgern 15 des Fahrgestellrahmens 1 verbunden sind. Die Dämpferelemente 27 verlaufen dabei im Wesentlichen rechtwinklig zu den Längsträgern 15 und sind einenendes an den Längsträgerelementen 15 und anderenendes an den Flanken 26 des Unterfahrschutzes 7 befestigt. Über die Dämpferelemente 27 kann einer Wankbewegung 28 des Fahrerhauses 2 (nicht gezeigt) gegenüber dem Fahrgestellrahmen 1 um die Fahrzeuglängsachse 29 entgegengewirkt werden.

### Bezugszeichen:

- 1: Fahrgestellrahmen
- 2: Fahrerhaus
- 3: Antriebsaggregat
- 4: Fahrbetriebsstellung
- 5: Offenstellung
- 6: Schürze
- 7: Unterfahrschutz
- 8: Längsschiene
- 9: Schlittenführung
- 10: Kotflügel
- 11: Rad
- 12: Feder-Dämpfer-Bein
- 13: Fahrtrichtung
- 14: vorderes Ende des Fahrgestellrahmens
- 15: Rahmenlängsträger
- 16: Stütze
- 17: Fahrbahn
- 18: Dämpferelement
- 19: Nickbewegung
- 20: teilweise Offenstellung
- 21: Rückwand des Fahrerhauses
- 22: Lauffläche
- 23: maximale Offenstellung
- 24: Anlenkungspunkt des Fahrerhauses am Fahrgestellrahmen
- 25: Stopper
- 26: Flanke des Unterfahrschutzes
- 27: Dämpferelement
- 28: Wankbewegung
- 29: Fahrzeuglängsachse
- 30: Stützeinrichtung

## Patentansprüche

1. Nutzfahrzeug mit einem gegenüber dem Fahrgestellrahmen (1) federbar abgestützten Fahrerhaus (2), das auf mindestens zwei Längsschienen (8) aufruht, die in einer Schlittenführung (9) des Fahrgestellrahmens (1) geführt sind, wobei die räumliche Lage des Fahrerhauses (2) gegenüber dem Fahrgestellrahmen (1) aus einer, ein Antriebsaggregat (3) abdeckenden Fahrbetriebsstellung (4) in eine, das Antriebsaggregat (3) freigebende Offenstellung (5; 20; 23) veränderbar ist, **dadurch gekennzeichnet, dass** das Fahrerhaus (2) einteilig gefertigt ist und dabei eine Fahrerhauskabine sowie eine frontseitig angeordnete Schürze (6) aufweist, welche die die Fahrbahn ausleuchtenden Scheinwerfer aufnimmt, wobei an der Schürze (6) ein Unterfahrschutz (7) befestigt ist, der sich in solcher Weise am Fahrgestellrahmen (1) mittelbar oder unmittelbar abstützt, dass eine unerwünschte Nickbewegung des Fahrerhauses (2) unterdrückt ist.

2. Nutzfahrzeug nach Anspruch 1, **dadurch gekennzeichnet, dass** das Fahrerhaus (2) über Feder-Dämpfer-Beine (12) mit den Längsschienen (8) verbunden ist.

3. Nutzfahrzeug nach Anspruch 1, **gekennzeichnet durch** eine das Fahrerhaus (2) in der Offenstellung (5; 20; 23) stabilisierende Stützeinrichtung (30).

## Claims

1. A commercial vehicle having a driver's cab (2) which is supported in a sprung manner with respect to the chassis frame (1) and rests on at least two longitudinal rails (8) which are guided in a slide guide (9) of the chassis frame (1), it being possible for the spatial position of the driver's cab (2) with respect to the chassis frame (1) to be changed from a driving mode position (4) which covers a drive assembly (3) into an open position (5; 20; 23) which exposes the drive assembly (3), **characterized in that** the driver's cab (2) is of single-piece manufacture and in the process has a driver's cab compartment and a valance (6) which is arranged on the front side and accommodates the headlights which illuminate the roadway, an underride guard (7) being fastened to the valance (6), which underride guard (7) is supported indirectly or directly on the chassis frame (1) in such a way that an undesired pitch movement of the driver's cab (2) is suppressed.

2. The commercial vehicle according to Claim 1, **characterized in that** the driver's cab (2) is connected to the longitudinal rails (8) via spring/damper struts (12).

3. The commercial vehicle according to Claim 1, **characterized by** a supporting device (30) which stabilizes the driver's cab (2) in the open position (5; 20; 23).

## Revendications

1. Véhicule utilitaire comprenant un poste de conduite (2) supporté à suspension par rapport au châssis (1), lequel poste de conduite repose sur au moins deux rails longitudinaux (8) qui sont guidés dans un guide à chariot (9) du châssis (1), la position spatiale du poste de conduite (2) par rapport au châssis (1) pouvant être modifiée d'une position de fonctionnement de conduite (4) recouvrant un groupe motopropulseur (3) dans une position d'ouverture (5 ; 20, 23) libérant le groupe motopropulseur (3), **caractérisé en ce que** le poste de conduite (2) est fabriqué d'une seule pièce et présente en l'occurrence une cabine de conduite ainsi qu'une jupe (6) disposée du côté frontal, qui reçoit le phare éclairant la route, un système anti-encastrement (7) étant fixé à la jupe (6), lequel s'appuie de manière directe ou indirecte sur le châssis (1) de telle sorte qu'un mouvement de basculement indésirable du poste de conduite (2) soit évité.

2. Véhicule utilitaire selon la revendication 1, **caractérisé en ce que** le poste de conduite (2) est connecté par le biais de jambes ressort-amortisseur (12) aux rails longitudinaux (8).

3. Véhicule utilitaire selon la revendication 1, **caractérisé par** un dispositif de support (30) stabilisant le poste de conduite (2) dans la position d'ouverture (5 ; 20 ; 23).
